# EUROPEAN PATENT APPLICATION

(11) **EP 2 395 703 A2**
(43) Date of publication of application: **14.12.2011**
(21) Application number: 11004344.5
(22) Date of filing: 26.05.2011
(51) Int. Cl.: H04L 12/24, H04L 29/08

(54) **Global control policy manager**

(30) Priority: 10.06.2010 US 813085
(71) Applicant: Broadcom Corporation, Irvine, CA 92617 (US)
(72) Inventor: Diab, Wael William, 94109 San Francisco, CA, (US)
(74) Representative: Jehle, Volker Armin

(57) **Abstract**

A system for managing energy efficiency and control mechanisms in a network having a plurality of network components includes a global control policy manager (GCPM) having a global control policy (GCP) and coupled to at least one of the plurality of network components. The GCPM is configured to receive power information from the at least one of the plurality of network components, analyze the power information, generate a control policy modification based on the GCP and the received power information, and send the control policy modification to the at least one of the plurality of network components.

## Description

### CROSS REFERENCE TO RELATED APPLICATIONS

The present application is related to U.S. Non-Provisional Patent Application No. TBD (Atty. Docket #2875.3930000), filed concurrently herewith, which is entitled "Virtual Machine Power Manager," and is incorporated herein by reference in its entirety ("VMPM Application").

### FIELD OF THE INVENTION

The present invention generally relates to managing power consumption a network that uses virtual machines.

### BACKGROUND OF THE INVENTION

Energy costs continue to escalate in a trend that has accelerated in recent years. Because of this, various industries have become increasingly sensitive to the impact of those rising costs. One area that has drawn increasing scrutiny is the IT infrastructure. Many companies are now looking at their IT systems' power usage to determine whether the energy costs can be reduced. For this reason, an industry focus on energy efficient networks has arisen to address the rising costs of IT equipment usage as a whole (*e.g*., PCs, displays, printers, servers, network components, etc.).

Modem networking components are increasingly implementing energy consumption and efficiency (ECE) control mechanisms. Some ECE control mechanisms allow physical layer components to enter and exit a low power state. An ECE control policy controls when and under what circumstances, ECE control enabled physical layer components enter and exit low power states. Device control policies play a key role in maximizing savings while minimizing performance impact on the network.

The same modem networks that are increasingly using ECE-enabled components also are increasingly using virtualized components. Virtualized environments, managed by virtual machine managers (VMMs) are deployed in different ways, on top of different physical topologies.

One of the advantages to deploying applications in a virtualized environment is the flexible relationship between virtualized applications and system hardware. Modem virtual machine managers (VMMs) are able to quickly move virtualized applications to different hardware systems based on different considerations, e.g., security, high availability, energy efficiency and performance.

Often, when virtualized applications are migrated to work with new hardware devices, the virtualized applications are unable to fully utilize different features and functions of the new hardware devices. Further, new hardware devices may have a configurable options that are configured to be in conflict with the requirements of migrated virtualized jobs. This same problem can occur on a smaller scale when new hardware devices are added to existing systems.

Even when devices are able to be reconfigured to match the new requirements of a migrated virtualized job, there is no unifying, global approach to coordinating the control policies of various system devices.

Challenges to implementing a global control policy for systems running virtualized jobs include the dynamic nature of VM configurations and the different types of topologies upon which a VM can be deployed, *e.g*., VMs that span multiple machines, complex and dynamically changing network topologies, and the maintenance of performance standards.

Thus, what is needed is an approach to overcoming the shortcomings described above.
According to an aspect, a system is provided for managing energy efficiency and control mechanisms in a network having a plurality of network components, comprising:
   a global control policy manager (GCPM) having a global control policy (GCP), and coupled to at least one of the plurality of network components, wherein the GCPM is configured to:
      receive power information from the at least one of the plurality of network components;
      analyze the power information;
      generate a control policy modification based on the GCP and the received power information; and
      send the control policy modification to the at least one of the plurality of network components.
Advantageously, one of the plurality of network components is one of, a switch and a router.
Advantageously, one of the plurality of network components is a host.
Advantageously, the control policy modification is directed to a control policy for a device that implements Energy Efficient Ethernet (EEE) mechanisms.
Advantageously, the control policy modification is directed to the energy efficiency settings associated with a port on a switch.
Advantageously, the control policy modification is directed to increasing the energy efficiency of a traffic path.
Advantageously, the traffic path is a new traffic path that was determined based on a system configuration change.
Advantageously, the generating of the control policy modification is performed in response to a system configuration change.
Advantageously, the system configuration change is the migration of a virtualized job from one virtual machine in the network to another virtualized machine in the network.
Advantageously, the system further comprises, a virtual machine having a virtualized job running thereon, and wherein the GCP is based on the requirements of the virtualized job.
Advantageously, the system further comprises a second virtual machine, and wherein the generating of the control policy modification is configured to occur when the virtualized job is migrated from the first virtual machine to the second virtual machine.
Advantageously, the migrating of the virtualized job from the first virtual machine to the second virtual machine comprises the spanning of the virtualized job to be executed on both virtual machines.
According to an aspect, a method is provided of managing energy control and efficiency (ECE) mechanisms in a network having a plurality of network components, the method comprising:
   receiving, at a global control policy manager (GCPM), power information from at least one of the plurality of the network components;
   analyzing the power information;
   generating a control policy modification based on a global control policy (GCP) and the received power information; and
   sending the control policy modification to the at least one of the plurality of the network components.
Advantageously, the at least one of the plurality of network components is a virtual machine power manager (VMPM).
Advantageously, the GCP was created based on the requirements of a virtualized job.
Advantageously, the method further comprises before the generating a control policy modification stage:
   analyzing a virtualized job; and
   generating a global control policy based on the analyzing of the virtualized job.
Advantageously, the control policy modification is directed to a control policy for a device that implements Energy Efficient Ethernet (EEE) mechanisms.
According to a further aspect, a system is provided for managing energy efficiency and control mechanisms in a network comprising:
   a first host;
   a first virtual machine hosted by the first host;
   a second host;
   a second virtual machine hosted by the second host;
   a first set of hardware components having a first control policy applied thereto, and coupled to the first host;
   a second set of hardware components having a second control policy applied thereto, and coupled to the second host;
   a virtualized job running on the first virtual machine; and
   a global control policy manager (GCPM), wherein if the virtualized job is migrated from the first virtual machine to the second virtual machine, the GCPM is configured to reconfigure the second control policy to match the requirements of the virtualized job.
Advantageously:
   the first set of hardware components is a first set of switches coupled to each other, the first host and the destination node such that they form a first traffic path;
   the second set of hardware components is a second set of switches coupled to each other, the second host and the destination node such that they form a second traffic path; and
   the GCPM is configured to reconfigure the second control policy to promote a goal with respect to the second traffic path.
Advantageously, the goal is increased efficiency.
Advantageously, the goal is increased performance.

### BRIEF DESCRIPTION OF THE DRAWINGS/FIGURES

The accompanying drawings illustrate the present invention and, together with the description, further serve to explain the principles of the invention and to enable one skilled in the pertinent art to make and use the invention.

FIG. 1 is a block diagram of a system for managing energy control and efficiency (ECE) mechanisms in a network having a plurality of network components, according to an embodiment of the present invention.

FIG. 2 is a block diagram of a system for managing energy control and efficiency (ECE) mechanisms in a network having a plurality of network components, including multiple hosts, according to an embodiment of the present invention.

FIG. 3 is a block diagram of a system for managing energy control and efficiency (ECE) mechanisms in a network having a plurality of network components, including virtual machine power managers, according to an embodiment of the present invention.

FIG. 4 is a block diagram showing different embodiments of a global control policy manager.

FIG. 5 is a block diagram of a system for managing energy control and efficiency (ECE) mechanisms in a network having a plurality of network components, including a virtual machine shown spanning two hosts, according to an embodiment of the present invention.

FIG. 6 illustrates an example use of a global control policy manager according to an embodiment of the present invention.

FIG. 7 illustrates an example use of a global control policy manager with multiple hosts according to an embodiment of the present invention.

FIG. 8 illustrates an example use of a global control policy manager with a single host according to an embodiment of the present invention.

FIG. 9 shows a flowchart illustrating a method of managing energy control and efficiency (ECE) mechanisms in a network having a plurality of network components according to an embodiment of the invention.

The invention is described with reference to the accompanying drawings. The drawing in which an element first appears is typically indicated by the leftmost digit(s) in the corresponding reference number.

### DETAILED DESCRIPTION OF THE INVENTION

The following detailed description of the present invention refers to the accompanying drawings that illustrate exemplary embodiments consistent with this invention. Other embodiments are possible, and modifications may be made to the embodiments within the spirit and scope of the invention. Therefore, the detailed description is not meant to limit the invention. Rather, the scope of the invention is defined by the appended claims.

Features and advantages of the invention are set forth in the description that follows, and in part are apparent from the description, or may be learned by practice of the invention. The advantages of the invention are realized and attained by the structure and particularly pointed out in the written description and claims hereof as well as the appended drawings. The following detailed description is exemplary and explanatory and is intended to provide further explanation of the invention as claimed.

The embodiment(s) described and references in the specification to "one embodiment," "an embodiment," "an example embodiment," etc., indicate that the embodiment(s) described may include a particular feature, structure, or characteristic. However, every embodiment may not necessarily include the particular feature, structure or characteristic. Moreover, such phrases are not necessarily referring to the same embodiment. When a particular feature, structure or characteristic is described in connection with an embodiment, it is understood that it is within the knowledge of one skilled in the art to effect such feature, structure, or characteristic in connection with other embodiments, whether or not explicitly described.

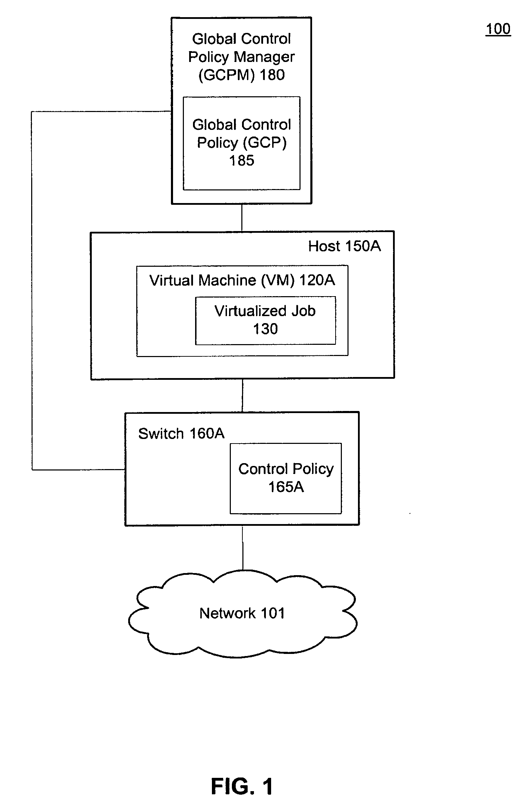

FIG. 1A is a block diagram of an embodiment of a system 100 for managing energy conservation and efficiency (ECE) and control mechanisms in a network having a virtual machine. Host 150A is depicted coupled to network switch (switch) 160A and global control policy manager (GCPM) 180. Host 150A includes a virtual machine (VM) 120A. Switch 160A is shown coupled to network 101 and having control policy 165A. Virtualized job 130 is shown as performed by VM 120A.

Under one approach to ECE, control policy implementation, control policy 165A is individual to each hardware component in the system. Control policies are described further below.

In an embodiment described further herein, if virtualized job 130 is placed on a new hardware configuration, of if there is otherwise a system configuration change, global control policy manager (GCPM) 180 reprograms individual hardware control policies 165 for the new configuration components according to global control policy (GCP) 185.

Host 150A is typically a computer with various computer system configurations, including multi-core multiprocessor systems, minicomputers, mainframe computers, computer linked or clustered with distributed functions, as well as pervasive or miniature computers that may be embedded into virtually any device. In an embodiment, a host 150A of larger capacity/performance can be termed a computer server, or just server.

As used herein network 101 can be any one or more networks of any type including, but not limited to, local area networks, medium area networks, or wide-area networks, such as, the Internet. In an embodiment, system 100 is a subset of a larger, interconnected data center having multiple hosts 150A and switches 160A connected by network 101.

Network switch 160A is typically a networking bridge device with data ports that can additionally have routing/switching capability, e.g., L3 switch/router. The switch could have as little as two data ports or as many as 400 or more data ports, and can direct traffic in full duplex from any port to any other port, effectively making any port act as an input and any port as an output. Herein, data ports and their corresponding links can be interchangeably referred to as data channels, communication links, data links, etc, for ease of discussion. Because the physical depictions in the figures should not be interpreted as limiting, switch 160A and host 150A, as used herein can include host 150A and switch 160A combined in a single physical device (not shown). Switch 160A also broadly includes the use of switch logic in modem tiered switching architectures. In an embodiment, switch 160A functions can be physically combined with host 150A functions in a single device, e.g., integrating a 2-port v-switch function on a server. In an embodiment, switch 160A can also utilize higher layer functionality, such as access control lists (ACLs) and L4 switching/routing approaches.

VM 120A is typically an instance of a virtual machine as a part of a virtualization platform. One having skill in the art will know of modem virtualization platforms and their implementation. A system having a virtual machine typically provides a complete system platform, which supports the execution of a complete operating system (OS). The virtual machine OS may be operating on one or more physical machines (e.g., host 150A) that may be shared with other virtual machines.

As used herein energy consumption and efficiency (ECE) control mechanisms are used to refer to various modem techniques for controlling the energy consumption and efficiency of devices. Generally speaking, these ECE mechanisms are designed to reduce energy consumption and improve efficiency while maintaining an acceptable level of performance.

One example of an ECE control mechanism is a mechanism that is configured to use the IEEE P802.3az standard, also known as Energy Efficient Ethernet, which is incorporated herein by reference. EEE is an IEEE suggested standard that is designed to save energy in Ethernet networks on a select group of physical layer devices (PHYs). An example control mechanism applied to a EEE enabled switch can monitor the TX buffer in the switch, and direct the switch to go into a low power idle (LPI) state under certain circumstances.

Example PHYs referred to within the EEE standard include the 100BASE-TX and 1000BASE-T PHYs, as well as emerging 10GBASE-T technology and backplane interfaces, such as 10GBASE-KR.

In an embodiment, different network components may have different ECE capabilities. For example, some components may have no ECE capabilities, while others may only have basic idle capacity, e.g., idle on or idle off. Other more sophisticated components can have internal "control policies" that guide ECE functions.

As typically used herein, a control policy is broadly used to describe a guiding policy that control when a physical device uses an energy saving function. For example, a control policy for a switch can describe when, and under what circumstances the switch enters and exits an energy-saving low power state. A control policy may be used to control one or more physical or virtual devices in a system. Control policies (also termed physical control policies or device control policies), for example, add an additional layer of control to EEE capable devices.

### Global control policy manager (GCPM)

As used herein an embodiment of global control policy (GCP) 185 is a configuration policy that sets out a high level objective for individual device control policies, so as to promote different results associated with virtualized job 130. In another embodiment, GCP 185 can have settings that are directed to promoting results associated with different components, including host 150A generally and a combination of virtualized jobs. One having skill in the relevant art with access to the teachings herein will appreciate that the global system control policy outlined in GCP 185 can have different levels of detail and be applied to different types of related considerations.

According to an embodiment, GCPM 180 can interact with the hardware of system 100 and use GCP 185 to coordinate their ECE mechanisms, control policies and other related controls, with the requirements of virtualized job 130. An embodiment of GCP 185 can also balance the requirements of virtualized job 130 against other network considerations, e.g., performance, security, etc. In an embodiment, GCPM 180 actions to improve ECE performance can be balanced, coordinated with, and otherwise modified by, other performance characteristics and goals set for the system generally, and other virtualized jobs specifically.

In an embodiment, GCP 185 can be manually generated by a user or an outside, automated process. In another embodiment, GCP 185 is automatically generated by GCPM 180 by collecting data about virtualized job 130 and network 100 components, and automatically selecting an advantageous global policy. Both the manual and automatic approaches described above can be combined as well.

In implementing GCP 185, GCPM 180 can receive various types of ECE/power-relevant information (power information) about network components. GCPM 180, in embodiments, can also direct configuration changes to affect the components from which this power information is received. Examples of this power information include physical layer (PHY) information, link information, ECE control policy information and application information. One having skill in the relevant arts, with access to the teachings herein, will appreciate that a broad range of information, characteristics, policies, etc., will qualify as power information as used herein.

Physical layer (PHY) information can relate to the operational characteristics or capabilities of a network component itself, including characteristics such as the supported link rates available to the network component, the different modes of operation (e.g., subset modes) available to the component, etc.

Link information can relate to the utilization of the links between network components. An example of link information is traffic buffer fullness. In another example, the link information can include burstiness parameters (e.g., size of the bursts on the link, time between bursts, idle time on the link, etc.) that enable a determination of the actual link utilization. Another example is the percentage of link capacity usage over time, e.g., if the average usage of a 10G link is always less than 1G over a period of time this can be a useful measure of link utilization.

ECE policy parameters can relate to those parameters that can govern the analysis and/or operation of the control policy set for the network component. When GCPM 180 used GCP 185 to generate a configuration change for a device control policy for example, policy parameters can be set to govern the ECE operation of the device, including link utilization thresholds, IT policies, user parameters, etc. Finally, application information can relate to the characteristics of the system applications that can govern the operation of network components. An example of useful application information includes the streams running through an analyzed network component, e.g., in a L2 switch without virtualization, awareness of an AVB stream running through the component can be useful in helping determine whether lower power states are useful.

It should be noted that the principles of the present invention can be broadly applied to various contexts, such as in all PHYs that implement ECE (e.g., backplane, twisted pair, optical, etc.). Moreover, the principles of the present invention can be applied to standard or non-standard (e.g., 2.5G, 5G, 100M, 1G and 10G optical interfaces, PON, etc.) link rates, as well as future link rates (e.g., 40G, 100G, 400G, Terabit etc.). It should also be noted that the principles of the present invention can be applied to a given link either asymmetrically or symmetrically.

GCP 185 can be fixed, or dynamic, based on system operation. In a system where GCP 185 is fixed, even though the coordinating, global policy is unchanging, the physical implementation of the global policy (e.g., at the device control policy level) could change based the changing characteristics of the hardware.

Global control policy manager (GCPM) 180 could also dynamically modify the GCP 185 based on the changing requirements and tolerances of virtualized job 130. As noted above, GCPM 180 is configured to gather information on system performance and virtualized job 130, and this information can be used, in an embodiment, to dynamically, advantageously alter GCP 185.

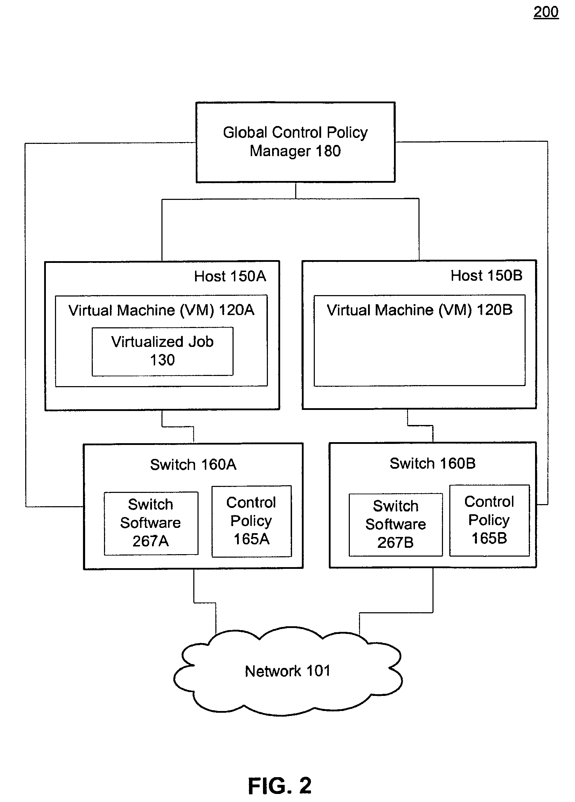

FIG. 2 shows system 200 having GCPM 180 coupled to multiple VMs 120A-B and switches 160A-B. In an embodiment, GCPM 180 is coupled either directly or indirectly (not shown) to different physical, virtual and software components of system 200. The physical components include hosts 150A-B and switches 160A-B, the virtual components include VMs 120A-B and virtualized job 130, and the software components include switch software 267A-B.

As should be appreciated, the specific set of power information received, the analysis performed on the power information, and the process of implementing GCP 185 based on the power information and the specifics of virtualized job 130, would be implementation dependent. Regardless of the data collected and the analysis mechanisms used, it is significant that GCPM 180 is using GCP 185 along with analysis of power information from network components to guide the coordinated programming of device control policies 165A-B.

### Virtual Machine Power Manager (VMPM)

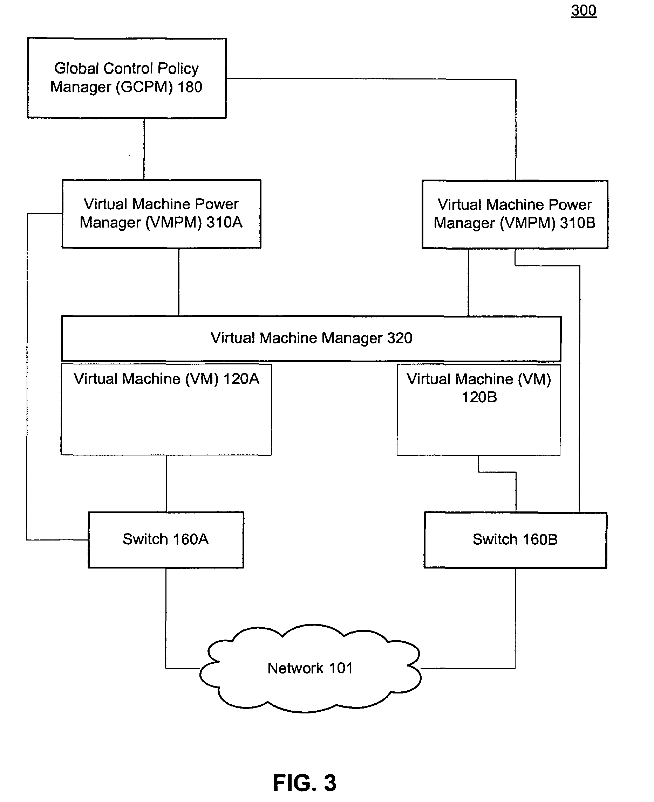

FIG. 3 shows system 300 having GCPM 180 coupled to virtual machine power managers (VMPM) 310A-B. VMPMs 310A-B are shown coupled to respective VMs 120A-B, each of which are coupled to respective switches 160A-B.

Virtual machines 120A-B are typically managed by a virtual machine manager (also known a hypervisor), such as virtual machine manager (VMM) 320. One having skill in the relevant art will appreciate that in some implementations, the virtual control plane (e.g., VMM 320) of a virtualized system can be unaware of different aspects of the physical portions of the system. This lack of information in VMM 320 is especially important with respect to ECE improvement, e.g., VMM 320 does not have information about different ECE capabilities, control policies and other power conservation features of different system components.

VMPMs 310A-B, in an embodiment, collect and relay ECE information associated with switches 160A-B to VMM 320 in order to improve ECE in system 300. In another embodiment, VMPMs 310A-B collect ECE information from network components and use the collected information to generate configuration instructions for VMM 320. An example of a Virtual Machine Power Manager (VMPM) 310A-B can be found in U.S. Patent Appl. No. TBD (Atty. Docket #2875.3930000), which is entitled "Virtual Machine Power Manager," filed herewith and is incorporated herein by reference in its entirety ("VMPM Application").

As depicted on FIG. 3, in an embodiment, GCPM 180 can receive information regarding system 300 components (switches 160A-B) from VMPMs 310A-B. In an embodiment, GCPM 180 can also send configuration instructions to network components through VMPMs 310A-B.

### Placement of GCPM

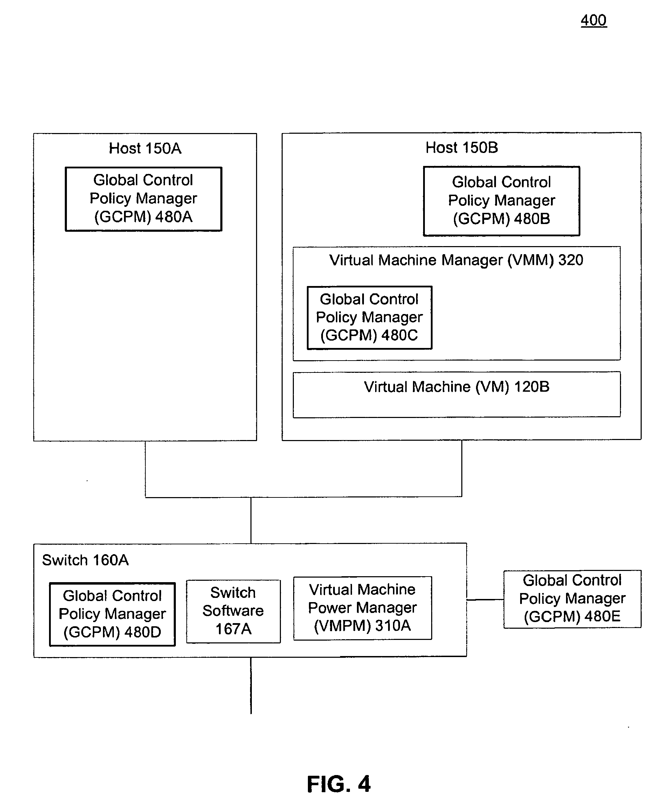

FIG. 4 illustrates system 400 with alternative physical and logical configurations for different embodiments of GCPM 180 from FIG. 1. Each depicted placement of GCPM 480A-E is intended to be non-limiting, and present a placement that can function independently or in coordination with other GCPM 480A-E components. For example, system 400 could have a single GCPM 480A, two GCPMs 480A-B, or all five GCPM 480A-E components.

In an embodiment, GCPM 480A is depicted on FIG. 4 placed as a component of host 150A. Instead of the external placement illustrated on FIG. 1A, GCPM 480A is depicted as a component on host 150A. As described above, in an embodiment, GCPM 180, 480A can connect with different network devices, e.g., switch 160A and other components of system 400. An embodiment of GCPM may be implemented in host 150A-B as either a software or hardware component.

GCPM 480C is depicted on FIG. 4 placed as a component of VMM 320, e.g., a software component or "plug-in." As would be appreciated by one skilled in the relevant arts, software systems, e.g., VMM 320, can allow add-on software components to be installed and interact with the main system. In an embodiment, GCPM 480C is designed to be installed as a plug-in in a VMM 320 software system. As would be appreciated by one having skill in the arts, other software interactions are also possible.

GCPM 480D is depicted in an embodiment on FIG. 4 placed as a component of switch 160A, e.g., a separate, software component linked to the existing switch software 167A or as a "plug-in" component (not shown) to switch software 167A. As would be appreciated by one having skill in the art, switch 160A can have installed switch software 167A and hardware logic that provide different functions to the switch device. In an embodiment, GCPM 480D is installed as hardware logic in switch 160A and can provide functions to each component in system 400. In another embodiment, GCPM 480D is installed as a software component in switch 160A. In another embodiment, GCPM 480E is depicted as an external component linked to switch 160A, this linkage contrasting with the embodiment illustrated on FIG. 1, where GCPM 180 shown as linked directly to host 150A.

The placement illustrations of FIG. 4 are not intended to be limiting. One having skill in the relevant art will appreciate that the functions of GCPM 180, 480A-E as described herein can be located in various positions within the systems described herein, implemented as either software or hardware, or a combination of the two.

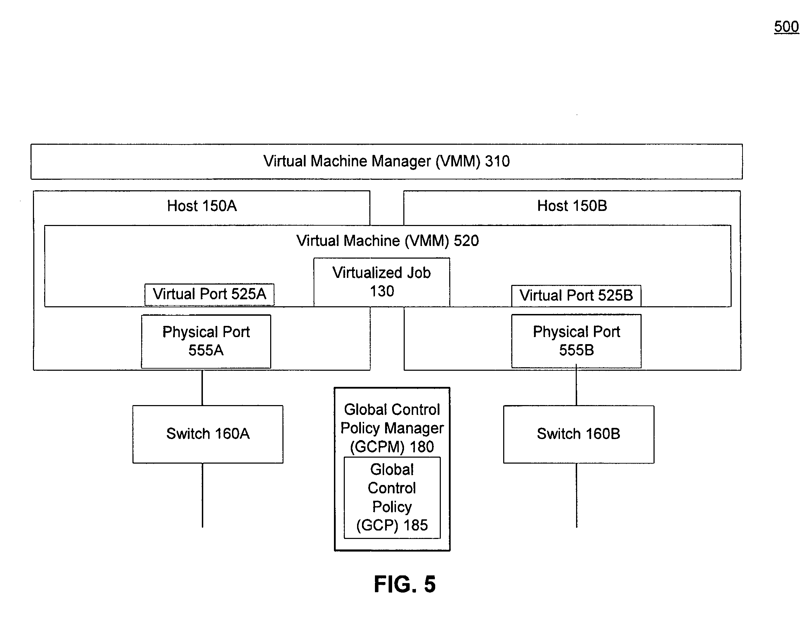

FIG. 5 illustrates an embodiment of system 500 having a virtual machine (VM) 520 that spans multiple physical hosts 150A-B, VMM 320 and GCPM 180A. The embodiment illustrated in FIG. 5 represents increasing complexity in terms of VM 520 ECE management.

VM 520 and its placement across multiple physical devices (hosts 150A-B) shows a varied ECE environment. For example, virtual port 525A and 525B now can map to physical port 555A and 555B respectively, such ports potentially having different ECE characteristics and control policies. It should be noted also that, in the embodiment illustrated in FIG. 5, each host 150A-B are depicted as physically connected to different switches 160A and 160B respectively. As noted above, GCPM 180A, in an embodiment, can coordinate the ECE capabilities and control polices between and among these complex connections. As noted above, GCPM 180A can reprogram the control policies of the system 500 components to follow a single, integrated global control policy. In another embodiment, GCPM 180A generates configuration changes directed to device control polices and these changes are sent to the devices for implementation.

In an embodiment illustrated on FIG. 5, GCPM 180A generates configuration changes that are directed to the components of system 500. The global approach to control policies described by embodiments herein can be especially useful because of the host 150A-B spanning by VM 520, as described above. In an embodiment, when VMM 320 allocates the performance of virtualized job 130 across VM 520, GCPM 180A is able to apply a consistent global control policy the additional components. In an embodiment, if VM 520 was expanded from only operating on host 150A to operating on both 150A-B, the implementation of global control policy (GCP) 185 can perform the following actions A1-A3:

A1. Reprogram the control policies applied to the components of host 150A, for example virtual port 525A and physical port 555A. Having an extra host applied to virtualized job 130 could affect the policies applied to host 150A.

A2. Reprogram the control policies of the system components associated with new host 150B to follow GCP 185, for example virtual port 525B and physical port 555B.

A3. GCPM 188 implementation logic can also implement control policy changes that affect internal traffic mapping between the ports of the original host 150A and new host 150B. After spanning is implemented, traffic associated with virtualized job 130 can be routed through switch 160B via physical port 555B, and the control policies can be altered to improve the performance of this new route.

It should be noted that actions A1-A3 are offered as non-limiting, illustrative examples only. Aspects of noted actions can be combined or altered without departing from the spirit of the invention.

### Examples

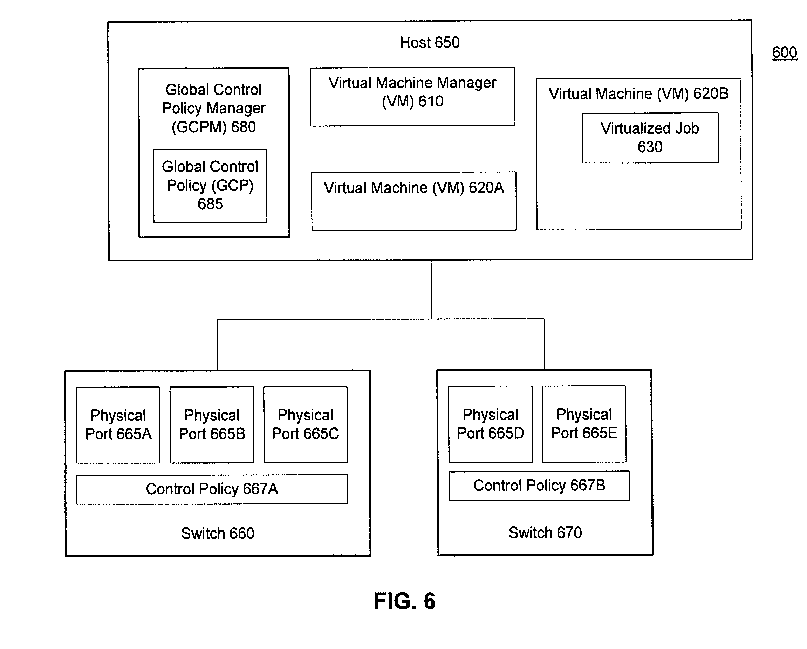

In an example shown on FIG. 6, host 650 is depicted as coupled to switches 660 and 670. Host 650 is depicted as having VMs 620A-B and GCPM 680, VM 620B having virtualized job 630 running thereon and GCPM 680 referencing GCP 685. Switch 660 has two physical ports 665A-C and switch 670 has two physical ports 665D-E, along with control policy 667A-B respectively. In this example, both switches are coupled to network 101 (not shown). In this example, the following characteristics apply:

C1. The ECE of system 600 can benefit from the application of ECE policies to virtualized job 630. For example, virtualized job 630 can be an e-commerce application that primarily serves a single geographic region, such application having long periods of idle time and specific, semi-predictable patterns of use (e.g., times when the demographic served by the site tends to shop).

C2. GCP 685 is a virtualized control policy that has been designed to take into account different characteristics of virtualized job 630. As noted herein, a broad range of different application characteristics can be considered when generating GCP 685.

C3. Control policy 667A is an individually applied ECE control policy installed in switch 660. As would be appreciated by one having skill in the arts with access to the teachings herein, the ECE control policy installed in switch 660 can control the ECE settings of physical ports 665A-C.

In an embodiment, some of the system 600 components described above are involved in the following timeline. Timeline events T1-T7 are intended to be illustrative and non-limiting. One having skill in the arts with access to the teachings herein will recognize that timeline events T1- T7 can be optional or occur in a different order:

T1. System 600, at the commencement of an exemplary embodiment, virtualized job 630 is running in VM 620B and switch 670 has not been implemented in system 600.

T2. GCPM 680 has set control policy 667A in switch 660 in accordance with the requirements of virtualized job 630.

T3. In the course of system 600 operation, it is determined that a new virtual machine (620A) is required to execute virtualized job 630. As described in the VMPM Application, this determining could be performed by a VMPM operating on host 650 (not shown), or by VMM 610 by normal operation.

T4. Based on the addition of a second VM (620A), GCPM 680 determines, based received power information and with reference to GCP 685, that the control policy (667A) of switch 660 should be modified.

T5. Using direct or indirect coupling between GCPM 680 and switch 660, GCPM reconfigures (reprograms) control policy 667A to account for the addition of VM 620A, and its effects upon virtualized job 630. In this way, global control policy (GCP) 685 remains static, but its implementation in physical control policy 667A at switch 660 is dynamically modified.

T6. As an additional example hardware modification to system 600, switch 670, as depicted on FIG. 6, can be implemented in system 600. This additional switch adds an additional data traffic path, and three more physical ports.

T7. In an embodiment, after event T5 above, GCPM 680 monitors system performance, power information and compares collected ECE data to the requirements of virtualized job 630—as expressed by global control policy (GCP) 685. GCPM 680 can also monitor the requirements of virtualized job 630. In an embodiment, if data is collected by GCPM 680 that indicates an advantageous change to GCP 685, this change can be made by GCPM 680. In this way, not only can the physical implementation of GCP 685 be dynamic (and adaptive), as noted in T5, but the GCP 685 itself can be dynamically altered to match changing circumstances. Factors F1-F4 below are a non-limiting list of example circumstances that can lead an embodiment to modify GCP 685:

F1. Virtualized job 630 requires an increased level of performance.

F2. Virtualized job 630 requires an increased level of energy savings and efficiency.

F3. The availability of new network components allow virtualized job 630 to take more system resources.

As would be appreciated by one having skill in the arts, given the description herein, other factors can be assessed when determining, in an embodiment, whether and how to change GCP 685.

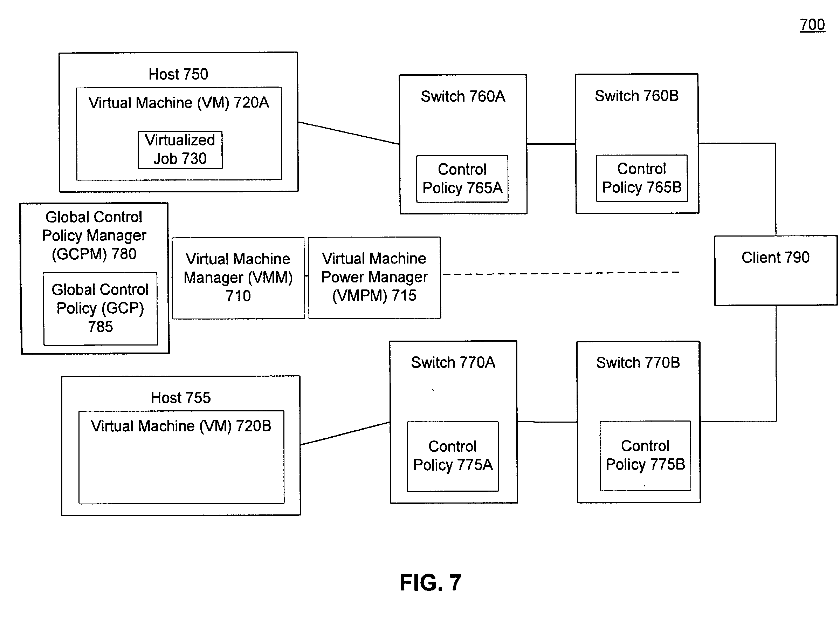

FIG. 7 illustrates a non-limiting example of system 700, where GCPM 780 manages power consumption in a network having a network topology including two hosts (750, 755), four switches (760A-B, 770A-B) and client 790. Each host (750, 755) hosts VM 720A-B respectively, and virtualized job 730 is performed initially by VM 720A.

In an example embodiment illustrated on FIG. 7, switches 760A-B and 770A-B have control policies 765A-B and 775A-B respectively.

In the VMPM Application, example embodiments are described that illustrate systems and methods whereby VMM 710 and VMs 720A-B can receive information from system 700 components. This collected information can also be used by VMPM 715 to generate configuration instructions for VMM 710.

Broadly speaking, an example event referencing FIG. 7 is described below wherein virtualized job 730 operating on VM 720A (using a first traffic path) is migrated to VM 720B (using a second traffic path). A traditional approach to this migration would typically have the virtualized job adapt to the environment. In an example described below, GCPM 780 is used to apply GCP 785 to the second traffic path, GCP 785 being designed to improve ECE for virtualized job 730 specifically.

Specifically, in the example event noted above occurring in system 700, VMM 710, in the course of managing VMs 720A-B, migrates virtualized job 730 from VM 720A to VM 720B. This example migration event helps to illustrate the function of an embodiment of GCPM 780. As would be appreciated by one having skill in the art, different reasons can influence the migration of virtualized job 730 from VM 720A to VM 720B, e.g., security, performance and high-availability. As is noted in the related VMPM Application, VMPM 715 can generate configuration instructions for VMM 710 that instruct this type of migration.

Based on the migration event described above, in the present application, GCPM 780 can use GCP 785 to guide the reconfiguration of the network components attached to the new host (755) associated with virtualized job 730. In an embodiment, GCPM 780 can reconfigure control policies 775A-B if they are not optimized for the requirements of virtualized job 730. This reconfiguration of individual physical device control policies (775A-B) to implement a "global" GCP 785 is a feature of an embodiment. Because of this "global" reach, GCPM 780 can be thought to be implementing a control policy that spans the switches and other components of system 700, thereby unifying ECE policies and promoting advantageous ECE configurations.

An embodiment can be thought of as reprogramming the new physical environment associated with migrated virtualized job 730. Control policies 775A-B can be coordinated in an advantageous fashion by GCPM 780, and better outcomes can be achieved. Simply put, in an embodiment, instead of requiring virtualized job 730 to adapt to the new hardware environment, as occurs in a traditional approach, the hardware environment is adapted by GCPM 780 to the requirements of migrated virtualized job 730.

Different variations of the above example can be considered. In an embodiment, GCP 785 can also be designed to implement combined requirements of multiple virtual jobs running on system 700.

### Virtual Global Control Policy: Traffic Routing/Switching

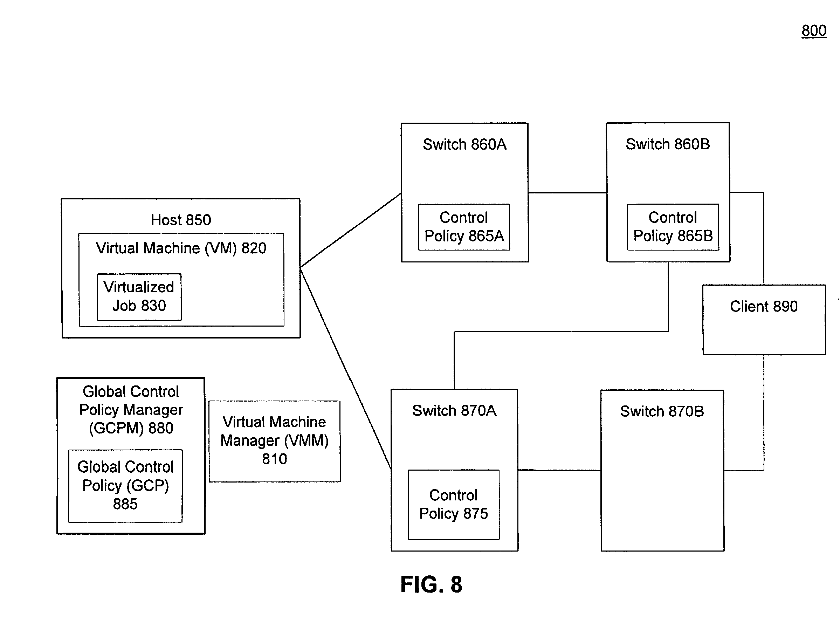

FIG. 8 depicts a non-limiting example of network 800, where GCPM 880 uses GCP 885 to manage ECE for virtualized job 830 in network 800 having a network topology including host 850, four switches (860A-B, 870A-B), virtual machine manager (VMM) 810 and client 890. Because the teachings herein as applied to traffic path selection can be generally applied to all components that handle these functions, as used herein, the terms routing, switching and routing/switching are generally used interchangeably.

In an example embodiment illustrated using FIG. 8, switches 860A-B have control policies 865A-B controlling ECE capabilities on the respective switches. In this example, switches 860A-B and 870A have control policies (865A-B, 875) that implement EEE capabilities, and switch 870B has no control policy, and no EEE capabilities.

VMM 810, in an embodiment, can direct traffic through various network traffic paths, e.g., host 850 to switch 860A to switch 860B to client 890 or host 850 to switch 870A to switch 860B to client 890. One having skill in the art will appreciate that this routing/switching can be accomplished in a variety of ways, including the tagging of data packets and the routing/switching by the switches according to the tags. Because the teachings herein as applied to traffic path selection can be generally applied to all components that handle these functions, as used herein, the terms routing, switching and routing/switching are generally used interchangeably.

In this embodiment, GCPM 880 has collected the control policies and the characteristics of all hardware components shown on FIG. 8, and has analyzed them in the context of the requirements of virtualized job 830 and GCP 885. As would be appreciated by one having skill in the relevant arts, given the description herein, GCPM 880 can work with VMM 810 to shape traffic paths on network 800 by adjusting and programming control policies 865A-B and 875.

In this example, because the ECE capabilities of switches 860A-B and the lack of ECE capabilities on switch 870B, GCPM 880 can reprogram the 860A-B control policies (865A-B) to increase their ECE efficiency for virtualized job 830 traffic. In an embodiment, GCPM 880 can "shape the path" by changing control policy 865A-B configurations and VMM 810 can manage the routing of traffic along the path. This routing/switching can be performed by VMM 810 using the packet tagging approach described above. As would be appreciated by persons having skill in the relevant arts, other traffic paths and approaches can be considered.

FIG. 8 also illustrates a second non-limiting example in network 800, In an embodiment, GCPM 880 can be "traffic-aware" in its coordination of ECE policies and capabilities. In this example, virtualized job 830 requires network paths to carry both high priority (e.g., video streaming, VoIP) traffic and low-priority (e.g., HTML) traffic. Those skilled in the relevant arts will understand that different ECE policies/approaches can be designed around different traffic types. In this second example, GCPM 880 can set control policies 865A-B (controlling switches 860A-B), to buffer low-priority standard traffic and immediately relay VoIP high-priority traffic. In an embodiment, GCPM 880 is coupled to the FIG. 8 switches 860A-B and 870A-B, and can receive specific power information regarding ECE control policies and other information. The coordinating function of GCPM 880, in an embodiment, can act to unify control policies along a selected traffic path.

In another embodiment, GCPM 880 can also be performance-aware-weighing the performance implications of reconfiguring control policies on different routing/switching devices. For example, the four switches noted above (860A-B, 870A-B) can have control policies reconfigured by GCPM 880, to increase the speed of all traffic notwithstanding ECE considerations, if performance considerations dictate. One having skill in the relevant art, with access to the disclosure herein, will appreciate different applications and benefits of the above-described GCPM 880 functions.

This global control policy configuration according to the requirements of virtualized job 830 would not traditionally be available to VMM 810.

It should also be noted that, an embodiment of GCPM 880 can redirect traffic, independent of EEE control policy, to links that have lower energy signatures, e.g., rerouting 1G traffic from a 10G link to a 1G link and taking the higher latency provided by this approach.

### Method

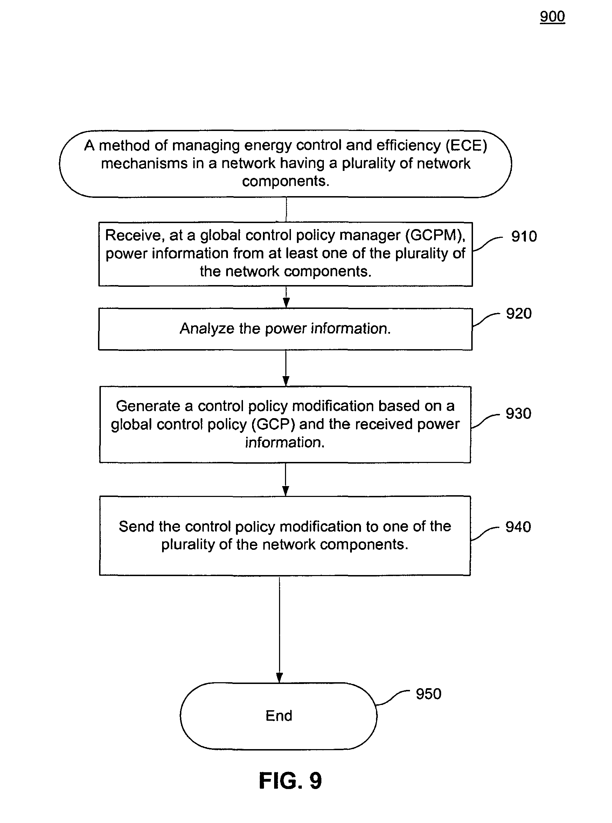

This section and FIG. 9 summarize the techniques described herein by presenting a flowchart of an exemplary method 900 of method of managing energy control and efficiency (ECE) mechanisms in a network having a plurality of network components. While method 900 is described with respect to an embodiment of the present invention, method 900 is not meant to be limiting and may be used in other applications.

As shown in FIG. 9, an embodiment of method 900 begins at step 910 where a global control policy manager (GCPM) receives power information from at least one of the plurality of the network components. In an embodiment, GCPM 780 receives power information, such as ECE information discussed above, from switches 770A-B from FIG. 7. Once step 910 is complete, method 900 proceeds to step 920.

At step 920, the power information is analyzed. In an embodiment, the power information, such as the ECE information from switches 770A-B, is analyzed by a GCPM 780. Once step 920 is complete, method 900 proceeds to step 930.

At step 930, a control policy modification is generated based on a global control policy (GCP) and the received power information. In an embodiment, the control policy modification is a modification of control policies 775A-B based on GCP 785 and the migration of virtualized job 130 from host 750 to host 755 (power information). Once step 930 is complete, method 900 proceeds to step 940.

At step 940, the control policy modification is sent to one of the plurality of the network components. In an embodiment GCPM 780 sends the control policy modification to switches 770A-B, where control policies 775A-B are modified. Once step 940 is complete, method 900 ends.

The manager functions herein (e.g. global control policy manager GCPM), virtual machine power manager (VMPM), virtual machine manager (VMM), etc.) can be implemented in hardware, software, or some combination thereof. For instance, the GCPM functions can be implemented using computer processors, computer logic, application specific circuits (ASIC), etc., as will be understood by those skilled in the arts based on the discussion given herein. Accordingly, any processor that performs the data collection, policy management, coordination, analysis functions described herein is within the scope and spirit of the present invention. For example, an embodiment of host 150A-B is a computer server using a processor to perform host functions.

Further, the GCPM functions described herein could be embodied by computer program instructions that are executed by a computer processor or any one of the hardware devices listed above. The computer program instructions cause the processor to perform the GCPM functions described herein. The computer program instructions (e.g. software) can be stored in a computer usable medium, computer program medium, or any computer-readable storage medium that can be accessed by a computer or processor. Such media include a memory device such as a RAM or ROM, or other type of computer storage medium such as a computer disk or CD ROM, or the equivalent. Accordingly, any computer storage medium having computer program code that cause a processor to perform the data collection, policy management, coordination, analysis functions and other related functions described herein are within the scope and spirit of the present invention.

### Conclusion

While various embodiments of the present invention have been described above, it should be understood that they have been presented by way of example and not limitation. It will be apparent to one skilled in the pertinent art that various changes in form and detail can be made therein without departing from the spirit and scope of the invention. Therefore, the present invention should only be defined in accordance with the following claims and their equivalents.

## Claims

1. A system for managing energy efficiency and control mechanisms in a network having a plurality of network components, comprising:
a global control policy manager (GCPM) having a global control policy (GCP), and coupled to at least one of the plurality of network components, wherein the GCPM is configured to:
receive power information from the at least one of the plurality of network components;
analyze the power information;
generate a control policy modification based on the GCP and the received power information; and
send the control policy modification to the at least one of the plurality of network components.

2. The system of claim 1, wherein one of the plurality of network components is one of, a switch and a router.

3. The system of claim 1, wherein one of the plurality of network components is a host.

4. The system of claim 1, wherein the control policy modification is directed to a control policy for a device that implements Energy Efficient Ethernet (EEE) mechanisms.

5. The system of claim 1, wherein the control policy modification is directed to the energy efficiency settings associated with a port on a switch.

6. The system of claim 1, wherein the control policy modification is directed to increasing the energy efficiency of a traffic path.

7. The system of claim 6, wherein the traffic path is a new traffic path that was determined based on a system configuration change.

8. The system of claim 1, wherein the generating of the control policy modification is performed in response to a system configuration change.

9. The system of claim 8, wherein the system configuration change is the migration of a virtualized job from one virtual machine in the network to another virtualized machine in the network.

10. The system of claim 1, further comprising, a virtual machine having a virtualized job running thereon, and wherein the GCP is based on the requirements of the virtualized job.

11. The system of claim 10, further comprising a second virtual machine, and wherein the generating of the control policy modification is configured to occur when the virtualized job is migrated from the first virtual machine to the second virtual machine.

12. The system of claim 11, wherein the migrating of the virtualized job from the first virtual machine to the second virtual machine comprises the spanning of the virtualized job to be executed on both virtual machines.

13. A method of managing energy control and efficiency (ECE) mechanisms in a network having a plurality of network components, the method comprising:
receiving, at a global control policy manager (GCPM), power information from at least one of the plurality of the network components;
analyzing the power information;
generating a control policy modification based on a global control policy (GCP) and the received power information; and
sending the control policy modification to the at least one of the plurality of the network components.

14. The method of claim 13, wherein the at least one of the plurality of network components is a virtual machine power manager (VMPM).

15. A system for managing energy efficiency and control mechanisms in a network comprising:
a first host;
a first virtual machine hosted by the first host;
a second host;
a second virtual machine hosted by the second host;
a first set of hardware components having a first control policy applied thereto, and coupled to the first host;
a second set of hardware components having a second control policy applied thereto, and coupled to the second host;
a virtualized job running on the first virtual machine; and
a global control policy manager (GCPM), wherein if the virtualized job is migrated from the first virtual machine to the second virtual machine, the GCPM is configured to reconfigure the second control policy to match the requirements of the virtualized job.
